# FASCICULE DE BREVET EUROPEEN

(11) **EP 1 563 205 B1**
(45) Date de publication et mention de la délivrance du brevet: **28.10.2015**
(21) Numéro de dépôt: 03786027.7
(22) Date de dépôt: 20.11.2003
(51) Int. Cl.: F16H 25/00

(54) **ACTIONNEUR DE DEPLACEMENT D'UN ELEMENT**
AKTUATOR ZUM VERSCHIEBEN EINES ELEMENTS
ACTUATOR FOR MOVING AN ELEMENT

(30) Priorité: 21.11.2002 FR 0214590
(43) Date de publication de la demande: 17.08.2005
(73) Titulaire: ISP System, 65460 Bazet (FR)
(72) Inventeur: SAUVAGEOT, Paul, F-65500 CAMALES (FR); GARCIA, Thierry, F-65800 Orleix (FR)
(74) Mandataire: Célanie, Christian
(86) Numéro de dépôt international: PCT/FR2003/003428
(87) Numéro de publication internationale: WO 2004/048811

(56) Documents cités:
- DE-A- 10 010 392
- DE-A- 19 939 133
- US-A- 3 407 018
- US-A1- 2002 017 017
- US-B1- 6 186 016
- PATENT ABSTRACTS OF JAPAN vol. 018, no. 254 (M-1605), 16 mai 1994 (1994-05-16) & JP 06 033902 A (NISSAN MOTOR CO LTD), 8 février 1994 (1994-02-08)

## Description

Le secteur technique de la présente invention est celui des dispositifs à faible course, en particulier une course micrométrique.

Ces dispositifs peuvent être désignés par le terme actionneur micrométrique et sont utilisés pour la génération et la maîtrise d'un effort bidirectionnel appliqué à un élément ou une pièce, et dans un domaine de déplacement micrométrique en fonctionnement statique ou quasi-statique. A titre d'exemple, il peut être utilisé par exemple afin de déformer un miroir dans une application de correction de surface d'onde et/ou de le positionner.

Un actionneur micrométrique d'efforts peut comporter une interface élastique afin de réaliser un actionneur de déplacement (ou positionneur) capable de positionner des optiques, des capteurs ou tout autre charge avec une précision nanométrique.

On connaît actuellement différents types d'actionneurs à faible course. On trouve notamment sur le marché des moteurs à force linéaire électrique, des vérins pneumatiques ou hydrauliques, ou encore des actionneurs fonctionnant par effet inverse piézo-électrique ou électro-strictif.

Exemples d'actionneurs à faible course sont décrits dans les documents US-A-3407018, US-A-6186016 et DE-A-10010392.

Ces actionneurs présentent cependant de nombreux inconvénients, et notamment la nécessité d'utiliser une fonction de commande complexe afin de réguler l'effort appliqué, l'utilisation continue d'une source d'énergie pour maintenir l'effort appliqué, ou encore des problèmes d'hystérésis en fonctionnement élevé.

Le but de la présente invention est donc de fournir un dispositif de déplacement qui applique à une pièce quasi-statique (se déplaçant peu ou pas sous l'effet de la force) un effort de ± 50 N par exemple, qui maintienne cet effort hors énergie. Elle procure un dispositif doué d'une sensibilité d'effort inférieure à 1 gramme, qui assure une grande stabilité sur le maintien de l'effort, tout en utilisant des technologies de construction et de commande économiques et en étant peu sensible à un déplacement parasite de la pièce.

L'invention a donc pour objet un dispositif de déplacement à faible course d'un élément selon la revendication 1.

Selon une caractéristique, la première partie de l'ensemble mobile se présente sous la forme d'une pièce apte à se déplacer par rapport au corps et la deuxième partie se présente sous la forme d'un plateau.

Selon une autre caractéristique, le premier et le second moyen élastiques sont constitués par des ressorts et/ou des blocs de matériaux élastiques.

Selon encore une autre caractéristique, les ressorts sont du type hélicoïdal de traction et/ou de compression.

Selon une autre caractéristique, le moyen d'entraînement se présente sous la forme d'un système vis/écrou entraîné par un élément moteur.

Selon une autre caractéristique, l'élément moteur est relié à la partie fixe et entraîne en rotation l'écrou qui coopère avec la vis de manière à provoquer la translation de celle-ci en démultipliant l'effort dudit moteur, et en augmentant la sensibilité de l'application de l'effort sur l'élément à actionner.

Selon une autre caractéristique, l'élément moteur est relié à la partie fixe et entraîne en rotation la vis qui coopère avec l'écrou de manière à provoquer la translation de celui-ci en démultipliant l'effort dudit moteur, et en augmentant la sensibilité de l'application de l'effort sur l'élément à actionner.

Selon une autre caractéristique, en l'absence de fonctionnement de l'élément moteur, l'écrou ou la vis assurent un blocage de la deuxième partie mobile de manière à lui interdire tout déplacement.

Selon une autre caractéristique, un détecteur d'origine est positionné sur la vis, et est activé par celle-ci pour permettre la détermination du sens de pilotage de l'élément moteur et la remise en position d'origine de ladite vis.

Selon une autre caractéristique, l'élément moteur est un moteur pas à pas ou un moteur à courant continu ou un moteur pneumatique.

Selon une autre caractéristique, l'élément moteur est constitué par une commande manuelle du type bouton moleté, un entraînement par courroie, ou un flexible tournant.

Selon une autre caractéristique, le moyen d'entraînement se présente sous la forme d'un vérin dont le piston agit sur le plateau.

Selon une autre caractéristique, la partie mobile comprend au niveau de son extrémité libre des moyens de fixation sur l'élément à actionner.

Selon une autre caractéristique, le dispositif comporte une interface élastique interposée entre l'élément et la partie mobile pour transformer un effort linéaire en un déplacement linéaire et/ou rotatif.

Selon une autre caractéristique, l'interface élastique est fixée au corps fixe et est apte à supporter une charge radiale et transmettre à l'élément à actionner un déplacement axial.

Selon une autre caractéristique, l'interface élastique se présente sous la forme d'un soufflet.

Un tout premier avantage du dispositif selon l'invention réside dans la grande précision en fonctionnement piloté en boucle ouverte, ce qui ne nécessite donc pas l'asservissement du dispositif, ni l'utilisation de capteurs.

Un autre avantage réside dans l'utilisation d'éléments moteur conventionnels peu coûteux.

Un autre avantage encore réside dans l'absence de frottement entre la partie mobile et le corps de l'actionneur.

Un autre avantage réside dans le fait que le montage flottant de la partie mobile autorise des désalignements angulaires et radiaux sans frottements secs sans que cela n'interfère avec le bon fonctionnement de l'actionneur.

Un autre avantage encore est la limitation des hystérésis de fonctionnement.

Un autre avantage réside dans la possibilité de maintenir l'effort appliqué avec une très bonne stabilité, en l'absence d'énergie.

Enfin un avantage réside dans le fait qu'un tel système avec son interface de fixation à la pièce permet une meilleure répartition des efforts sur la surface de celle-ci.

D'autres caractéristiques, détails et avantages de l'invention ressortiront plus clairement de la description donnée ci-après à titre indicatif en relation avec des dessins dans lesquels :
- la figure 1 représente en coupe longitudinale un dispositif de déplacement selon un premier mode de réalisation de l'invention,
- la figure 2 illustre un exemple de réalisation de la liaison entre le dispositif de déplacement et l'élément sur lequel va s'appliquer l'effort,
- la figure 3 illustre un exemple d'adaptation du dispositif en un positionneur nanométrique,
- la figure 4 illustre un autre mode de réalisation d'un actionneur d'effort selon l'invention, et
- les figures 5 et 6 illustrent d'autres mode de réalisation du dispositif.

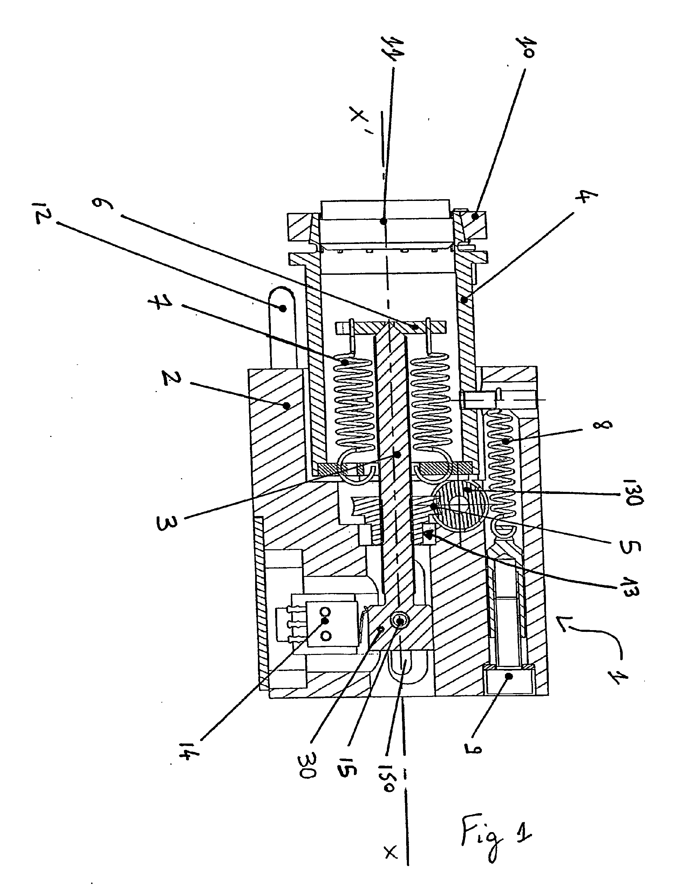

Sur la figure 1, on a représenté en coupe transversale, un dispositif sous la forme d'un actionneur micrométrique 1. L'actionneur 1 est composé d'un corps fixe 2 de révolution autour d'un axe xx' et d'un ensemble mobile.

L'ensemble mobile est composé d'une première partie 4 reliée au corps 2 par l'intermédiaire d'un premier moyen élastique 8 et d'une deuxième partie 6 reliée à la première partie par un second moyen élastique 7 et actionnée par un moyen d'entraînement 13 pour assurer au moins une translation de l'ensemble mobile par rapport au corps 2.

Cet actionneur est constitué plus particulièrement d'une vis 3, d'une pièce 4, d'un écrou 5, d'un plateau 6, de ressorts 7 de variation d'effort, de trois ressorts 8 de traction, de trois vis d'équilibrage de tension 9, d'un moyen de fixation 10 de l'actionneur 1 sur une interface 11, d'un moteur 130 et de goupilles 12 de centrage du corps 2 sur un support non représenté. Un détecteur d'origine 14 est positionné sur un bourrelet arrière 30 de la vis de déplacement micrométrique 3. L'interface 11 permet la fixation entre l'actionneur 1 et l'élément destiné à recevoir les efforts.

L'actionneur 1 est monté sur un support (non représenté) par l'intermédiaire de deux vis insérées depuis l'arrière du corps 2. Le centrage sur le support de montage s'effectue par les goupilles 12 insérées sur l'avant du corps 2.

Le moteur 130 est par exemple un moteur pas à pas. Le nombre de pas est choisi en fonction de la sensibilité d'effort souhaitée. Dans le cas représenté, le moteur 130 entraîne en rotation l'écrou 5, soit directement, soit par l'intermédiaire d'un réducteur, ce qui permet de démultiplier l'effort du moteur 130, et d'augmenter la sensibilité de l'application de l'effort.

Les trois ressorts 8 de traction sont répartis à 120° autour de l'axe xx' et sont chacun équipés du système 9 d'équilibrage de tension. Ces systèmes 9 agissent en traction entre le corps 2 et la pièce tubulaire 4 de l'actionneur 1, permettant ainsi d'ajuster les efforts individuellement sur chaque ressort 8.

Les ressorts 7 de variation d'effort sont disposés autour du plateau 6 de la vis 3 de déplacement micrométrique. Leur nombre peut être adapté en fonction des amplitudes d'effort à générer. Les ressorts agissent en traction entre le plateau 6 solidaire de la vis 3 de déplacement et la pièce 4 de l'actionneur. L'effort de traction de ces ressorts 7 s'oppose à l'effort généré par les ressorts 8 de génération d'effort.

En déplaçant la vis 3 dans un sens ou dans l'autre, les ressorts 7 de variation d'effort sont sollicités et chargent ou déchargent les ressorts 8 de génération d'effort. Ces efforts sont directement appliqués à l'élément attelé à la pièce 4.

La maîtrise des efforts ainsi développés est directement dépendante de la maîtrise du déplacement de la vis 3.

Lorsque le moteur 130 est arrêté, le maintien de l'effort appliqué reste constant et stable.

Le bourrelet 30 de la vis 3 active le détecteur 14 sur la moitié de la course de travail de la vis et permet ainsi de connaître le sens de pilotage du moteur 130 à appliquer lors d'une phase de remise en position origine.

Un pion 15 solidaire de la vis 3 coulisse dans une lumière 150 du corps 2 afin d'empêcher toute rotation de la vis 3, tout en lui autorisant un déplacement linéaire.

Les paramètres de pilotage de l'actionneur 1 dépendent des raideurs exactes des ressorts utilisés et des caractéristiques du déplacement de la vis 3. Ces raideurs et ces caractéristiques sont des paramètres stables et constants. L'intégration de ces paramètres dans le moyen de commande des actionneurs permet d'affiner la gestion des efforts développés.

De ce fait, les actionneurs 1 peuvent être pilotés par une commande de type :"boucle ouverte", c'est-à-dire que pour un nombre de pas assigné au moteur correspond un effort précis sur l'interface de la pièce.

Le moteur représenté sur la figure 1 est un moteur électrique de type connu, donné à titre d'exemple, mais tout autre type de moteur peut être utilisé dans le dispositif.

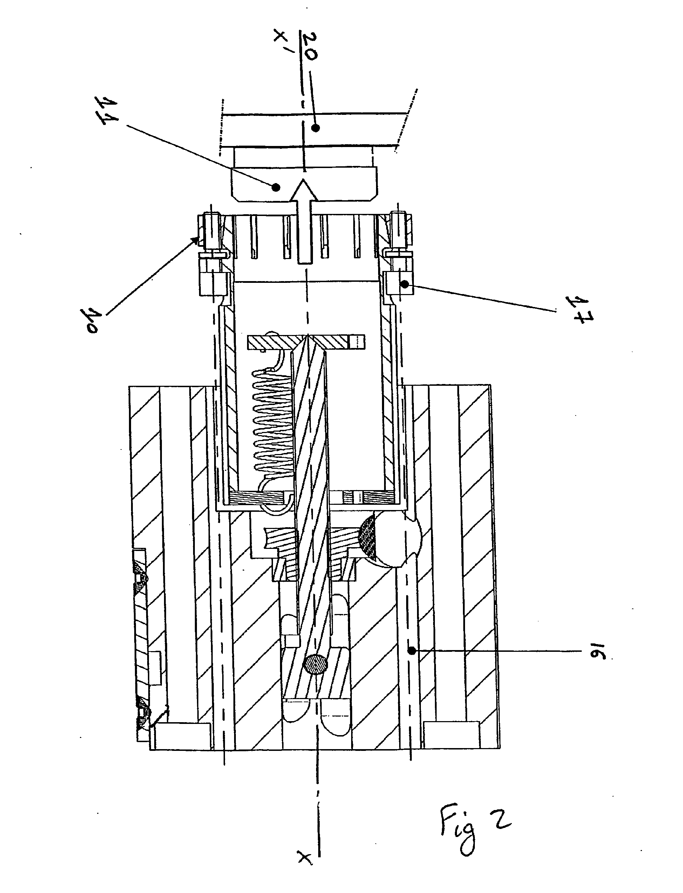

La figure 2 illustre un exemple de réalisation de la liaison entre l'actionneur 1 et un élément 20 sur laquelle on souhaite appliquer un effort.

Une interface de fixation 11 est collée au préalable sur l'élément 20 devant recevoir les efforts. Cette interface 11 permet d'améliorer la répartition des efforts appliqués.

La fixation à l'actionneur 1 se fait en introduisant l'interface 11 dans la pince 10 de la pièce tubulaire 4, et en serrant des vis 17 de serrage. Cette opération est effectuée depuis l'arrière de l'actionneur en passant un outil adapté dans des trous 16 de passage réalisés dans le corps 2.

Les vis 17 assurent aussi la fonction desserrage de la pince 10 pour les opérations de maintenance.

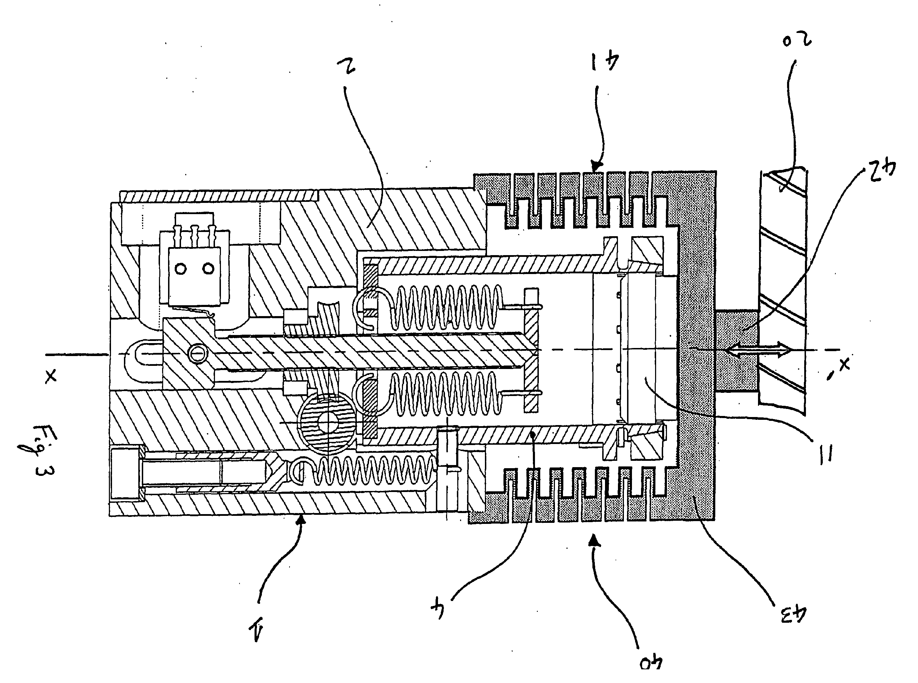

La figure 3 illustre un exemple d'utilisation de l'actionneur 1 selon l'invention, en tant qu'actionneur de déplacement.

L'actionneur 1 est muni d'une interface élastique 40 jouant le rôle d'une tête de translation. Cette tête de translation est constituée d'une partie cylindrique 41, d'une assiette 43 et d'un élément de fixation 42. La partie cylindrique 41 est élastiquement déformable et sa raideur axiale (c'est-à-dire suivant l'axe xx') est adaptée en fonction de l'amplitude des déplacements à effectuer. L'interface de fixation 11 applique un effort axial sur l'assiette 43, de manière à ce que celle-ci se déplace axialement. L'effort généré par la pièce 4 est ainsi transformé en déplacement linéaire par l'intermédiaire de la tête 40 à déformation élastique. Les frottements entre l'assiette 43 et l'interface 11 sont quasiment nuls, de manière à ce que la pièce tubulaire 4 ne soit pas perturbée par une charge radiale. Les efforts radiaux engendrés sont supportés par la partie cylindrique 41 et par le corps 2 sur lequel elle est fixée.

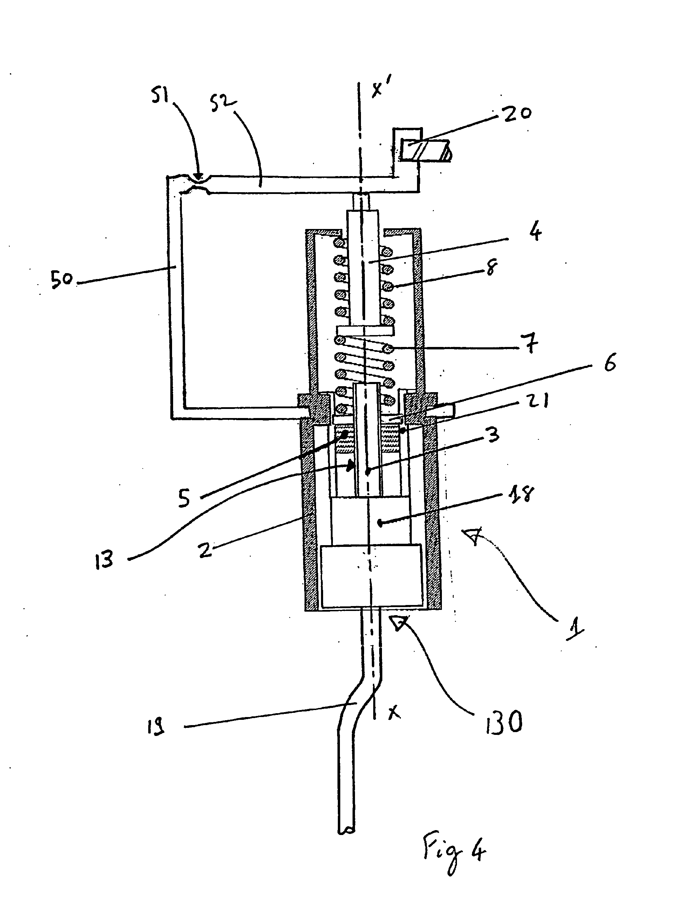

La figure 4 illustre un autre mode de réalisation d'un actionneur d'effort selon l'invention. Ce mode de réalisation diffère du précédent en ce que les premier et second moyens élastiques sont alignés sur l'axe XX'. On voit que ces moyens sont disposés autour de la partie 4 transmettant l'effort.

Dans cet exemple de réalisation, l'actionneur 1 a un rôle d'actionneur de déplacement. L'élément moteur 130 est constitué par un flexible tournant 19 et par un réducteur 18. Le profil extérieur de l'écrou 5 a une forme complémentaire du profil intérieur d'une glissière 21 afin de permettre la translation de celui-ci dans cette glissière.

Le flexible 19 est commandé en rotation par un moyen moteur quelconque (non représenté). Il engrène sur le réducteur 18 qui entraîne en rotation la vis 3 par rapport au corps 2. La rotation de la vis 3 entraîne l'écrou 5 en translation suivant l'axe xx'.

Un déplacement vers le haut dans le plan de la figure 4 (de x vers x') de l'écrou 5 comprime le ressort 7 qui déplace vers le haut la pièce 4 et comprime le ressort 8 de manière à ce que celui-ci s'oppose à l'effort du ressort 7.

Une interface élastique 50 est disposée entre la pièce 4 et l'élément 20 à actionner. L'interface 50 est fixée sur le corps 2 et comporte une section élastique 51 (par exemple une restriction de matière ou une section caoutchouteuse). L'effort de la pièce 4 sur l'interface élastique 50 provoque la rotation du bras 52 par rapport à la section 51. L'angle de rotation du bras 52 est proportionnel à l'effort appliqué et au coefficient d'élasticité de la section 51. La rotation du bras 52 entraîne l'élément 20 en rotation.

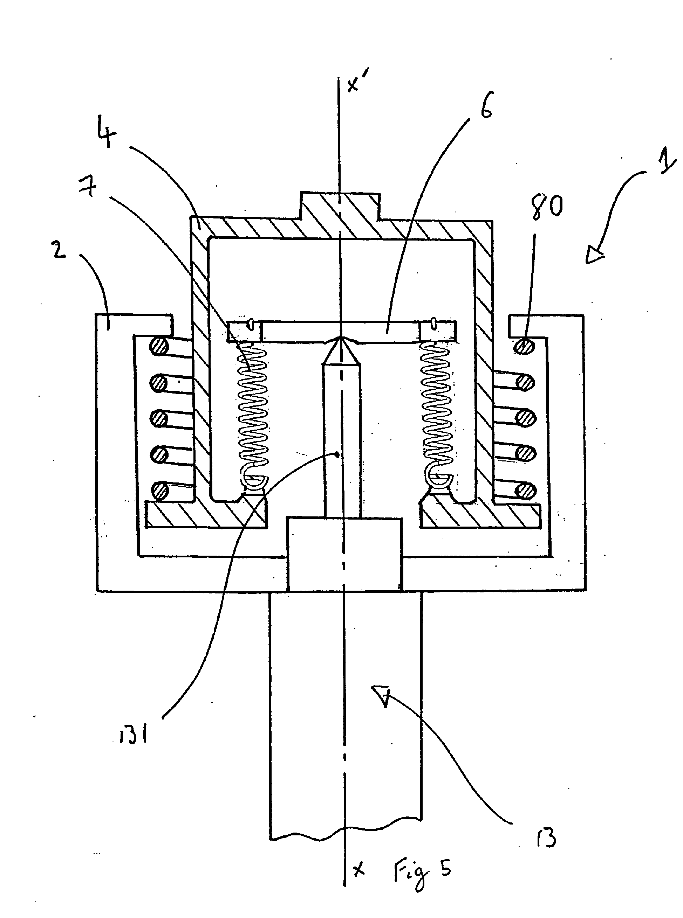

La figure 5 illustre encore un autre mode de réalisation d'un actionneur d'effort selon l'invention.

Dans cet exemple de réalisation, le moyen d'entraînement 13 est un vérin de positionnement micrométrique tel que l'on peut en trouver couramment dans le commerce.

Le doigt 131 du vérin 13 déplace en translation le plateau 6 et l'ensemble fonctionne comme expliqué précédemment. On voit encore que le premier moyen élastique est constitué par un ressort unique 80 maintenu en compression et disposé entre le corps 2 et l'élément mobile 4. Le second moyen élastique 7 est constitué de plusieurs ressorts comme décrit en relation avec la figure 1.

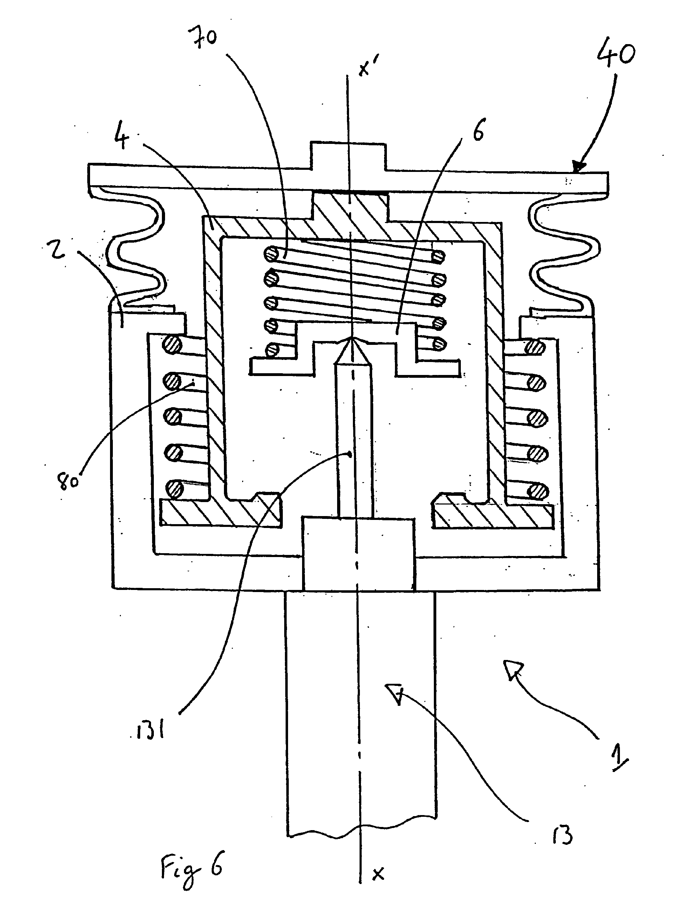

Sur la figure 6, on a représenté un autre mode de réalisation d'un actionneur selon l'invention utilisé en tant qu'actionneur de position. Toutefois, l'actionneur comprend un second moyen élastique constitué d'un ressort unique 70 et un premier moyen élastique constitué d'un ressort unique 80 alignés tous deux sur l'axe XX'. Une interface élastique 40 est disposée entre le corps fixe 2 et la partie mobile 4. Comme expliqué précédemment en relation avec la figure 3, cette interface joue le rôle d'une tête de translation.

Une telle réalisation de l'invention, selon les figures 5 et 6, s'adapte parfaitement sur un vérin de positionnement micrométrique. Ceci permet, pour un coût limité, de disposer d'un actionneur nanométrique d'effort ou de déplacement qui remplace facilement et rapidement un actionneur micrométrique. Le démontage du dispositif est tout aussi aisé.

On trouve une application de l'invention dans le positionnement précis de composants électroniques, afin d'effectuer par exemple de la métrologie, ou d'éléments optiques tels un télescope ou un générateur de rayons lumineux.

## Revendications

1. Dispositif de déplacement à faible course d'un élément (20), pour la génération et la maîtrise d'un effort bidirectionnel, du type comportant un corps fixe (2) et un ensemble mobile par rapport à celui-ci, **caractérisé en ce que** l'ensemble mobile est composé d'une première partie (4) reliée au corps (2) par l'intermédiaire d'un premier moyen élastique (8) et d'une deuxième partie (6) reliée à la première partie par un second moyen élastique (7) et déplacée par un moyen d'entraînement (13) pour assurer au moins une translation de la deuxième partie par rapport au corps (2), le moyen d'entraînement (13) se présentant sous la forme d'un système vis/écrou (3,5) entraîné par un élément moteur (130).

2. Dispositif de déplacement selon la revendication 1, **caractérisé en ce que** la première partie (4) de l'ensemble mobile se présente sous la forme d'une pièce apte à se déplacer par rapport au corps (2) et **en ce que** la deuxième partie (6) se présente sous la forme d'un plateau.

3. Dispositif de déplacement selon la revendication 1 ou 2, **caractérisé en ce que** le premier et le second moyen élastiques (7, 8) sont constitués par des ressorts et/ou des blocs de matériaux élastiques.

4. Dispositif de déplacement selon la revendication 3, **caractérisé en ce que** les ressorts sont du type hélicoïdal de traction et/ou de compression.

5. Dispositif de déplacement selon l'une des revendications 1 à 4, **caractérisé en ce que** l'élément moteur (130) est relié à la partie fixe (2) et entraîne en rotation l'écrou (5) qui coopère avec la vis (3) de manière à provoquer la translation de celle-ci en démultipliant l'effort dudit moteur, et en augmentant la sensibilité de l'application de l'effort sur l'élément (20).

6. Dispositif de déplacement selon l'une des revendications 1 à 4, **caractérisé en ce que** l'élément moteur (130) est relié à la partie fixe (2) et entraîne en rotation la vis (3) qui coopère avec l'écrou (5) de manière à provoquer la translation de celui-ci en démultipliant l'effort dudit moteur, et en augmentant la sensibilité de l'application de l'effort sur l'élément (20).

7. Dispositif de déplacement selon la revendication 5 ou 6, **caractérisé en ce que**, en l'absence de fonctionnement de l'élément moteur (130), l'écrou (5) ou la vis (3) assurent un blocage de la deuxième partie mobile (6) de manière à lui interdire tout déplacement.

8. Dispositif de déplacement selon l'une quelconque des revendications 1 à 7, **caractérisé en ce qu'**un détecteur d'origine (14) est positionné sur la vis (3), et est activé par celle-ci pour permettre la détermination du sens de pilotage de l'élément moteur (130) et la remise en position d'origine de ladite vis.

9. Dispositif de déplacement selon l'une quelconque des revendications précédentes, **caractérisée en ce que** l'élément moteur (130) est un moteur pas à pas ou un moteur à courant continu ou un moteur pneumatique.

10. Dispositif de déplacement selon l'une quelconque des revendications précédentes, **caractérisée en ce que** l'élément moteur (130) est constitué par une commande manuelle du type bouton moleté, un entraînement par courroie, ou un flexible tournant.

11. Dispositif de déplacement selon l'une quelconque des revendications précédentes, **caractérisé en ce que** la partie mobile (4) comprend au niveau de son extrémité libre des moyens (10) de fixation sur l'élément (20) à actionner.

12. Dispositif de déplacement selon l'une quelconque des revendications précédentes, **caractérisé en ce qu'**il comporte une interface élastique (40, 50) interposée entre l'élément (20) et la partie mobile (4) pour transformer un effort linéaire en un déplacement linéaire et/ou rotatif.

13. Dispositif de déplacement selon la revendication 12, **caractérisé en ce que** l'interface élastique (40, 50) est fixée au corps fixe (2) et est apte à supporter une charge radiale et transmettre à la pièce (20) un déplacement axial.

14. Dispositif de déplacement selon la revendication 13, **caractérisé en ce que** l'interface (40) se présente sous la forme d'un soufflet.

## Patentansprüche

1. Vorrichtung zum Bewegen eines Elementes (20) um einen geringen Betrag zur Erzeugung und Beherrschung einer bidirektionalen Belastung von der Bauart, welche einen stationären Körper (2) und eine in Bezug auf diesen bewegliche Baugruppe umfasst, **dadurch *gekennzeichnet, dass*** die bewegliche Baugruppe aus einem mit Hilfe eines ersten elastischen Mittels (8) mit dem Körper (2) verbundenen ersten Abschnitt (4) und einem durch ein zweites elastisches Mittel (7) mit dem ersten Abschnitt verbundenen zweiten Abschnitt (6) zusammengesetzt ist und durch ein Antriebsmittel (13) bewegt wird, um mindestens eine Verlagerung des zweiten Abschnitts in Bezug auf den Körper (2) zu gewährleisten, wobei sich das Antriebsmittel (13) in Form eines Systems aus Spindel/Mutter (3, 5) darstellt, welches durch ein Motorelement (130) angetrieben wird.

2. Vorrichtung zum Bewegen nach Anspruch 1, **dadurch gekennzeichnet, dass** der erste Abschnitt (4) der beweglichen Baugruppe sich in Form eines Teiles darstellt, welches geeignet ist, sich in Bezug auf den Körper (2) zu bewegen, und dass der zweite Abschnitt (6) sich in Form einer Platte darstellt.

3. Vorrichtung zum Bewegen nach Anspruch 1 oder 2, **dadurch gekennzeichnet, dass** das erste und zweite elastische Mittel (7, 8) von Federn und/oder Blöcken aus elastischen Materialien gebildet werden.

4. Vorrichtung zum Bewegen nach Anspruch 3, **dadurch gekennzeichnet, dass** die Federn auf Zug und/oder Druck wirkende Schraubenfedern sind.

5. Vorrichtung zum Bewegen nach einem der Ansprüche 1 bis 4, **dadurch gekennzeichnet, dass** das Motorelement (130) mit dem stationären Abschnitt (2) verbunden ist und die Mutter (5) in Drehung versetzt, welche mit der Spindel (3) derartig zusammenwirkt, dass deren Verlagerung hervorgerufen wird, wobei die Belastung des genannten Motors untersetzt wird und die Empfindlichkeit der Beaufschlagung des Elements (20) mit der Belastung erhöht wird.

6. Vorrichtung zum Bewegen nach einem der Ansprüche 1 bis 4, **dadurch gekennzeichnet, dass** das Motorelement (130) mit dem stationären Abschnitt (2) verbunden ist und die Spindel (3) in Drehung versetzt, welche mit der Mutter (5) derartig zusammenwirkt, dass deren Verlagerung hervorgerufen wird, wobei die Belastung des genannten Motors untersetzt wird und die Empfindlichkeit der Beaufschlagung des Elements (20) mit der Belastung erhöht wird.

7. Vorrichtung zum Bewegen nach Anspruch 5 oder 6, **dadurch gekennzeichnet, dass** bei fehlender Funktion des Motorelementes (130) die Mutter (5) oder die Spindel (3) eine Blockierung des zweiten beweglichen Abschnitts (6) derartig gewährleisten, dass ihm jegliche Bewegung verwehrt wird.

8. Vorrichtung zum Bewegen nach einem der Ansprüche 1 bis 7, **dadurch gekennzeichnet, dass** ein Ausgangslagensensor (14) an der Spindel (3) angeordnet ist und durch diese aktiviert wird, um die Erfassung der Richtung der Ansteuerung des Motorelementes (130) und das Zurückführen der genannten Spindel in die Ausgangsposition zu ermöglichen.

9. Vorrichtung zum Bewegen nach einem der vorhergehenden Ansprüche, **dadurch gekennzeichnet, dass** das Motorelement (130) ein Schrittmotor oder ein Gleichstrommotor oder ein pneumatischer Motor ist.

10. Vorrichtung zum Bewegen nach einem der vorhergehenden Ansprüche, **dadurch gekennzeichnet, dass** das Motorelement (130) von einer manuellen Steuerung in Form eines Rändelknopfes, eines Riemenantriebs oder eines drehbaren Schlauchs gebildet wird.

11. Vorrichtung zum Bewegen nach einem der vorhergehenden Ansprüche, **dadurch gekennzeichnet, dass** der bewegliche Abschnitt (4) im Bereich seines freien Endes Mittel (10) zur Befestigung am zu betätigenden Element (20) umfasst.

12. Vorrichtung zum Bewegen nach einem der vorhergehenden Ansprüche, **dadurch gekennzeichnet, dass** sie eine elastische Schnittstelle (40, 50) umfasst, welche zwischen das Element (20) und den beweglichen Abschnitt (4) eingefügt ist, um eine lineare Belastung in eine lineare Bewegung und/oder Drehbewegung umzuwandeln.

13. Vorrichtung zum Bewegen nach Anspruch 12, **dadurch gekennzeichnet, dass** die elastische Schnittstelle (40,50) am stationären Körper (2) befestigt ist und geeignet ist, eine radiale Last aufzunehmen und an das Teil (20) eine axiale Bewegung zu übertragen.

14. Vorrichtung zum Bewegen nach Anspruch 13, **dadurch gekennzeichnet, dass** die Schnittstelle (40) sich in der Form eines Balgs darstellt.

## Claims

1. Device with short travel range to displace an element (20), for the generation and control of a bi-directional force, of the type incorporating a fixed body (2) and an assembly mobile with respect to said body, **characterized in that** the mobile assembly is composed of a first part (4) linked to the body (2) by means of first elastic means (8) and a second part (6) linked to the first part by second elastic means (7) and displacement by drive means (13) to ensure at least a translation of the second part with respect to the body (2), the drive means (13) being in the form of a screw/nut (3, 5) system driven by a motor element (130).

2. Displacement device according to Claim 1, **characterized in that** the first part (4) of the mobile assembly is in the form of a part able to move with respect to the body (2) and **in that** the second part (6) is in the form of a plate.

3. Displacement device according to Claims 1 or 2, **characterized in that** the first and second elastic means (7, 8) are constituted by springs and/or blocks of elastic material.

4. Displacement device according to Claim 3, **characterized in that** the springs are of the helicoidal traction and/or compression type.

5. Displacement device according to one of Claims 1 to 4, **characterized in that** the motor element (130) is linked to the fixed part (2) and drives the nut (5) which cooperates with the screw (3) in rotation so as to cause the screw to translate by augmenting the force of said motor, and by increasing the sensitivity of the application of force on the element (20).

6. Displacement device according to one of Claims 1 to 4, **characterized in that** the motor means (130) are linked to the fixed part (2) and drive the screw (3) which cooperates with the nut (5) in rotation so as to cause the nut to translate by augmenting the force of said motor and by increasing the sensitivity of the application of force on the element (20).

7. Displacement device according to Claim 5 or 6, **characterized in that**, should the motor element (130) not operate, the nut (5) and screw (3) ensure the immobilization of the second mobile part (6) so as to prevent any displacement.

8. Displacement device according to any one of Claims 1 to 7, **characterized in that** an origin sensor (14) is positioned on the screw (3), which activates it to enable the control direction of the motor element (130) to be determined and the screw to be returned to its starting position.

9. Displacement device according to any one of the above Claims, **characterized in that** the motor element (130) is a stepping motor or a continuous current motor or a pneumatic motor.

10. Displacement device according to any one of the above Claims, **characterized in that** the motor element (130) is constituted by a manual control of the knurled knob type, a belt drive, or a rotating flexible element.

11. Displacement device according to any one of the above Claims, **characterized in that** the mobile part (4) comprises means (10) at its free end to attach it to the element (20) to be actuated.

12. Displacement device according to any one of the above Claims, **characterized in that** it incorporates an elastic interface (40, 50) positioned between the element (20) and the mobile part (4) to transform a linear force into a linear and/or rotatory displacement.

13. Displacement device according to Claim 12, **characterized in that** the elastic interface (40, 50) is attached to the fixed body (2) and is able to bear a radial load and transmit an axial displacement to the part (20).

14. Displacement device according to Claim 13, **characterized in that** the interface (40) is in the form of a bellows.
